# EUROPEAN PATENT APPLICATION

(11) **EP 1 069 445 A1**
(43) Date of publication of application: **17.01.2001**
(21) Application number: 99909306.5
(22) Date of filing: 23.03.1999
(51) Int. Cl.: G02B 6/04

(54) **OPTICAL PART**

(30) Priority: 01.04.1998 JP 8880798
(71) Applicant: Hamamatsu Photonics K.K., Shizuoka-ken 435-8558 (JP)
(72) Inventor: SUGAWARA, Takeo, Hamamatsu Photonics K.K., Shizuoka-ken 435-8558 (JP)
(74) Representative: Brown, Kenneth Richard
(86) International application number: JP9901447
(87) International publication number: WO9950694

(57) **Abstract**

An optical component 10 is formed by disposing a plurality of optical fibers parallel to each other, and has an incident plane 10a cut obliquely to the optical axis, and an exit plane 10b cut vertically to the optical axis. The section of the optical component 10 is an orderly arrayed shape formed by combining optical fibers with the core 14 of which section is a rectangular equilateral triangle, by two each to form an optical fiber pair with a nearly regular triangular section. The clad 16 of each optical fiber is integrated by heating and pressing, and is disposed so as to fill up the gap between the cores 14 of two optical fibers for composing the optical fiber pair, and the gap between adjacent optical fiber pairs.

## Description

### Technical Field

The present invention relates to an optical component composed by arraying a plurality of optical fibers.

### Background Art

As an optical component for transmitting optical images, an optical component formed by arraying a plurality of optical fibers is widely known. The optical component has an incident plane and an exit plane exposing the core and clad of each optical fiber, and the optical image entering the incident plane is transmitted to the exit plane.

This optical component has numerous benefits including a high transmission efficiency and a smaller in size of optical system as compared with the lens, and is hence used in various fields such as fingerprint detecting system.

### Disclosure of the Invention

The optical component is usually manufactured by arraying and bundling a plurality of optical fibers in circular or square section, and forming integrally. Therefore, due to pressure at the time of integral forming, the section of the core of optical fibers for composing the optical component is transformed into polygonal shapes having mutually parallel diagonals such as square and hexagon, and the following problems occur.

That is, the light entering the incident plane with a specific incident angle is reflected repeatedly on the mutually parallel diagonals, and leaves the exit plane with a specific exit angle. As a result, a pattern having an intensity only in a specific exit angle is formed on the output image emitted from the exit plane, and this pattern becomes noise to lower the resolution of the optical component.

It is hence an object of the invention to solve such problems and prevent occurrence of pattern noise, and present an optical component of high resolution.

To solve the problems, the optical component of the invention is an optical component formed by arraying a plurality of optical fibers, and is characterized by a nearly triangular sectional shape of the core of each optical fiber. Since the sectional shape of the core of each optical fiber is triangular, the situation of reflection and progress of the light advancing through the core only by parallel diagonals in the core can be avoided, and it prevents formation of pattern having an intensity only in a specific exit angle. As a result, pattern noise is prevented, and an output image high in resolution can be obtained.

### Brief Description of the Drawing

Fig. 1A is a perspective view of an optical component according to a first embodiment of the invention.
Fig. 1B is a magnified sectional view along line I-I in Fig. 1A.
Fig. 2A to Fig. 2F are manufacturing process charts of optical fiber pair for composing the optical component.
Fig. 2G to Fig. 2J are sectional view of base materials manufactured in each process.
Fig. 3 is a magnified sectional view of optical fiber pair used in manufacture of the optical component.
Fig. 4 is a diagram showing the mode of progress of light in the core of optical fiber for composing the optical component.
Fig. 5 is a diagram showing the mode of progress of light in the core of optical fiber for composing the optical component.
Fig. 6 is a magnified sectional view of an optical component according to a second embodiment of the invention.
Fig. 7 is a magnified sectional view of an optical fiber used in manufacture of the optical component of the second embodiment of the invention.
Fig. 8 is a magnified sectional view of an optical fiber used in manufacture of the optical component of the second embodiment of the invention.
Fig. 9 is a magnified sectional view of an optical fiber used in manufacture of the optical component of the second embodiment of the invention.
Fig. 10 is a diagram showing the mode of progress of light in the core of the optical fiber for composing the optical component.
Fig. 11 is a diagram showing the mode of progress of light in the core of the optical fiber for composing the optical component.
Fig. 12A to Fig. 12C are manufacturing process charts of optical component in a prior art.
Fig. 13A to Fig. 13C are manufacturing process charts of optical component in a prior art.
Fig. 14A to Fig. 14C are manufacturing process charts of optical component in a prior art.
Fig. 15A to Fig. 15C are diagrams showing the mode of progress of light in the core of optical fiber for composing the optical component in a prior art.
Fig. 16A to Fig. 16C are diagrams showing the mode of progress of light in the core of optical fiber for composing the optical component in a prior art.

### Best Mode for Carrying Out the Invention

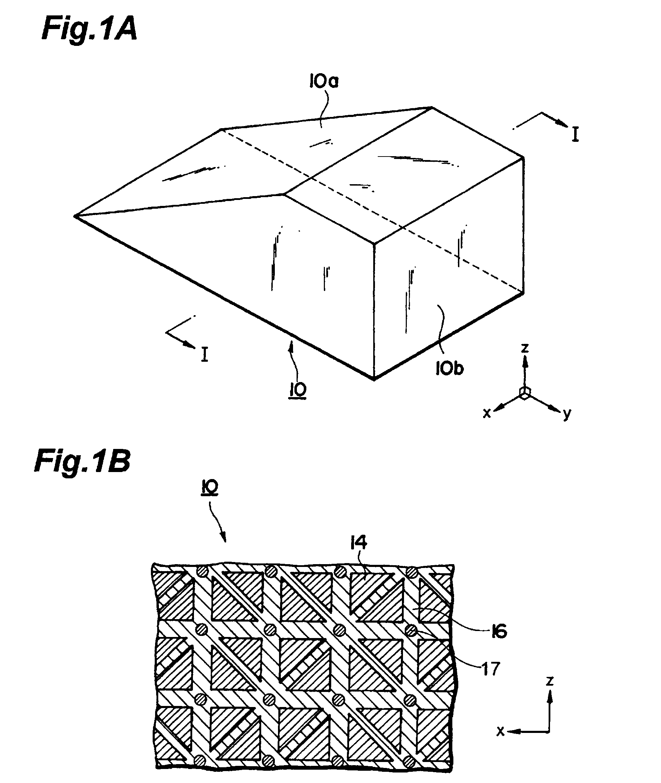

An optical component according to a first embodiment of the invention is described below while referring to the drawings. First, the structure of the optical component of the embodiment is explained. Fig. 1A is a perspective view of the optical component of the embodiment, and Fig. 1B is a magnified sectional view along line I-I in Fig. 1A.

An optical component 10 is formed by arraying a plurality of optical fibers of which core sectional shape is a rectangular equilateral triangle, parallel to each other. Each optical fiber is arrayed so that its optical axis may be parallel to the y-axis in Fig. 1A, and the optical component 10has an incident plane 10a being cut obliquely to the optical axis, and an exit plane 10b being cut vertically to the optical axis, in which the input pattern entering the incident plane 10a is reduced and is emitted from the exit planeb10b.

The section of the optical component 10 is as shown in Fig. 1B. That is, two optical fibers having a core 14 of which section is a rectangular equilateral triangle are combined in a nearly square section, and such optical fiber pairs are arrayed regularly. A clad 16of each optical fiber is integrally formed by heating and pressing process so as to fill up the gap between the cores 14 of two optical fibers composing the optical fiber pair, and the gap between the adjacent optical fiber pairs.

Herein, the core 14 is, for example, made of lead glass of which refractive index is 1.62, and the clad 16 is, for example, made of soda lime glass of which refractive index is 1.52. The oblique side of the core 14 is about 15 *µ*m, and the portion of the clad 16 provided in the gap of two cores 14 has a thickness of about 1 *µ*m which is more than 1/3 of the general wavelength (550 nm) in the optical component 10. The adjacent optical fiber pair is apart by about 1 *µ*m through the clad 16.

Further, in the clad 16, a light absorbent 17 extending in the axial direction of each optical fiber is inserted. By inserting the light absorbent 17 in the clad 16, stray light leaking in the clad 16, or the light invading into the optical component 10 from the side (other side than the incident plane and exit plane) can be effectively removed, and the resolution of the output pattern can be enhanced.

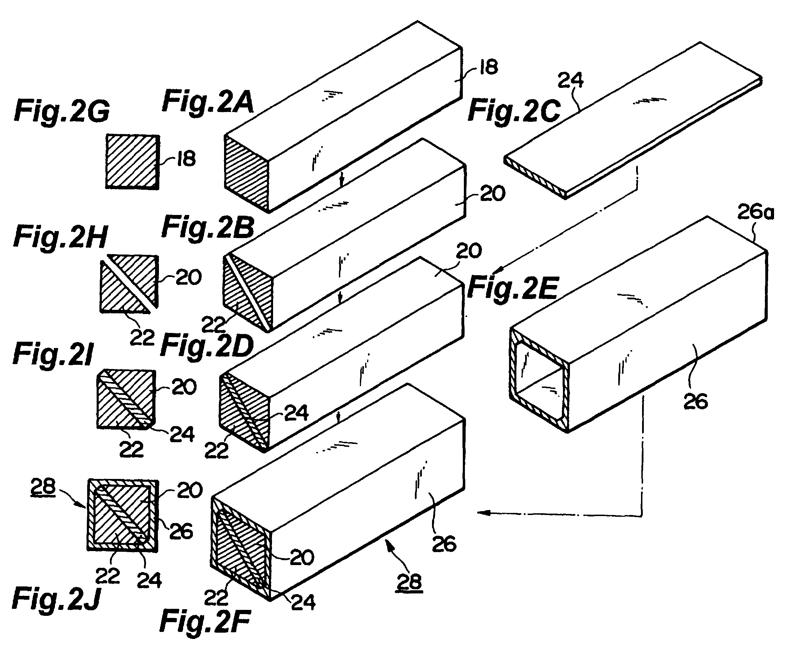

A manufacturing method of the optical component of the embodiment is explained. Fig.2AtoFig.2Faremanufacturing process charts of the optical fiber pair for composing the optical component, and Fig. 2G to Fig. 2J are sectional views of base materials and others manufactured in each process.

To manufacture the optical fiber for composing the optical component 10, in the first place, a core base material 18 having a square bottom and a square column is manufactured (Fig. 2A, Fig. 2G). The core base material 18 is, for example, made of lead glass of which refractive index is 1.62, and its side surface is polished by ceria polishing or other method.

In succession, the core base material 18 manufactured in this process is cut vertically (in the direction vertical to the bottom of the square column) by a diamond cutter or the like, and divided into two core base materials 20 and 22 of a triangular column with a rectangular equilateral triangular bottom (Fig. 2B, Fig. 2H). At this time, the cut section is polished by ceria polishing or other method.

Next, a flat clad base material 24 as shown in Fig. 2C is inserted between the two core base materials 20 and 22 (Fig. 2D, Fig. 2I). The clad base material 24 is, for example, made of soda lime glass of which refractive index is 1.52.

The manufactured assembly of the flat clad base material 24 inserted between the two core base materials 20 and 22 is mounted on a clad base material 26 having a square cylindrical shape as shown in Fig. 2E, and a base material 28 for manufacturing optical fiber pair is manufactured (Fig. 2F, Fig. 2J). Herein, the clad base material 26 is, for example, made of soda lime glass of which refractive index is 1.52, same as the clad base material 24, and one bottom 26a of the clad base material 26 is sealed by melting method using burner or the like.

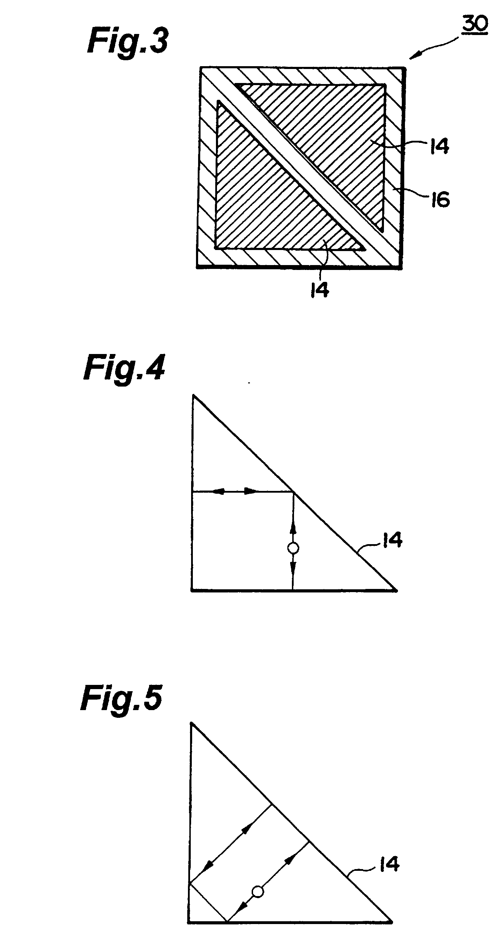

Later, this base material 28 is drawn in wire, and an optical fiber pair is manufactured. A magnified sectional view of the optical fiber pair manufactured in this method is shown in Fig. 3. The optical fiber pair 30 is composed of two cores 14 with a rectangular equilateral triangular section disposed face to face, and the gap of the two cores 14 and the surrounding of the two cores 14 (except for the gap) are filled up with the clad 16.

Herein, the portion of the clad 16 provided in the gap of two cores 14 has a sufficient thickness for acting as a clad for partitioning the two cores 14, and is preferred to have a thickness greater than 1/3 of the wavelength of the light transmitted by using the optical component 10. The specific shape of the optical fiber pair 30 is about 15 *µ*m in the oblique side of the core 14, and about 1 *µ*m in the thickness of the portion of the clad 16 disposed around the core 14, and considering the general wavelength is 550 nm, the thickness of the portion of the clad 16 provided in the gap of the two cores 14 is about 1 *µ*m.

A plurality of optical fiber pairs 30 manufactured in this process are integrally formed, while properly inserting bars of light absorbents 17, by disposing parallel to each other without allowing clearance, and heating and pressing, so that an optical component 10 is manufactured.

The operation of the optical component in this embodiment is explained below. To begin with, problems of the optical component of the prior art are clarified. In manufacture of optical component according to the prior art, usually, a plurality of optical fibers with circular or square section are disposed and bundled parallel to each other, and formed integrally. Or, to enhance the resolution of the optical component, the bundled optical fiber group is further drawn in wires (multi-fibers), and disposed parallel, bundle and formed integrally, or by repeating the drawing process and bundling process plural times (multi-multi-fibers), the optical component is formed integrally.

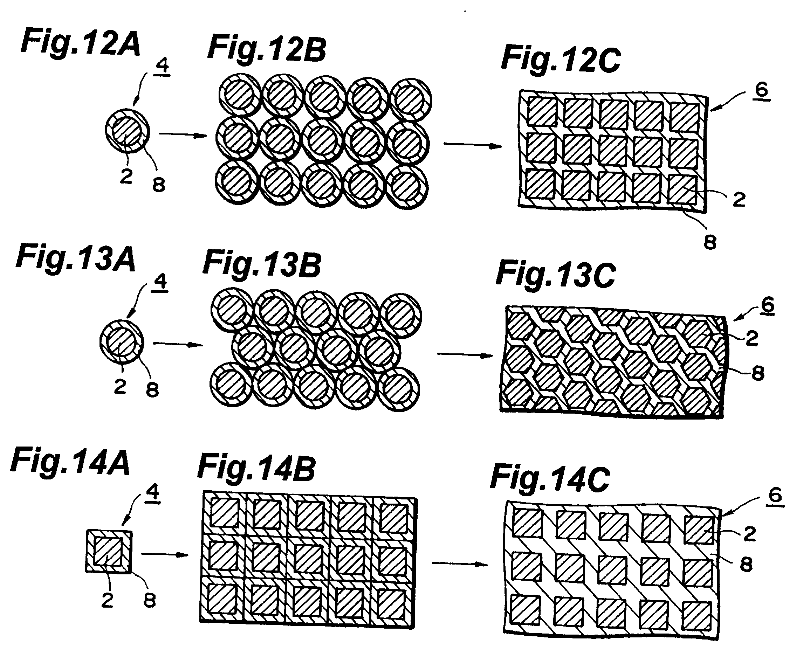

In the manufacturing process of the optical component by such manufacturing method, changes in sectional shape of the core of each optical fiber are shown in Fig. 12A to Fig. 12C, Fig. 13A to Fig. 13C, and Fig. 14A to Fig. 14C. Fig. 12A to Fig. 12C show changes in sectional shape of a core 2 when an optical component 6 is formed by disposing optical fibers 4 with the core 2 having a circular section at four corners. When the optical component 6 is formed by disposing the optical fibers 4 with the core 2 having a circular section at four corners, as shown in Fig. 12A to Fig. 12C, by heating and pressing process when forming integrally by bundling the optical fibers 4, the section of the core 2 of each optical fiber 4 is deformed into a nearly square shape.

Herein, the degree of deformation varies with the hardness of the core 2 and clad 8 of the optical fiber 4 under temperature in the heating and pressing process. If the core 2 is extremely hard as compared with the clad 8, the core 2 can be maintained in a circular section, but in order to avoid mutual contact of adjacent cores 2, it is practically difficult to increase the hardness of the core 2 extremely as compared with the clad 8.

Fig. 13A to Fig. 13C show changes in the sectional shape of the core 2 when the optical component 6 is formed by disposing optical fibers 4 with the core 2 having a circular section at six corners. In this case, by heating and pressing process when forming integrally by bundling the optical fibers 4, the section of the core 2 of each optical fiber 4 is deformed into a nearly hexagonal shape. Fig. 14A to Fig. 14C show changes in the sectional shape of the core 2 when the optical component 6 is formed by disposing optical fibers 4 with the core 2 having a square section at four corners. In this case, since there is no gap between the adjacent clads 8 when disposing each optical fiber4, the section of the core 2 is maintained in square even after heating and pressing process when forming integrally by bundling the optical fibers 4.

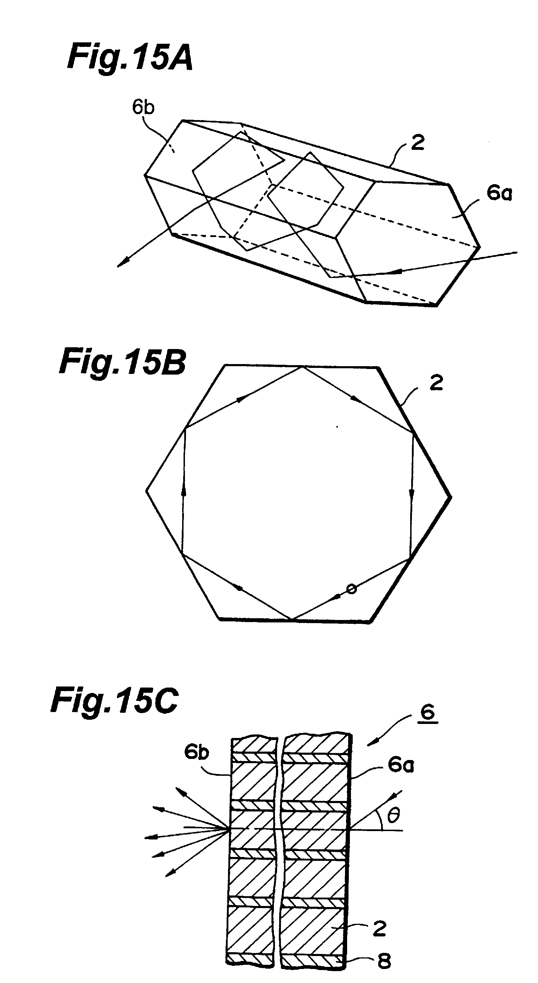

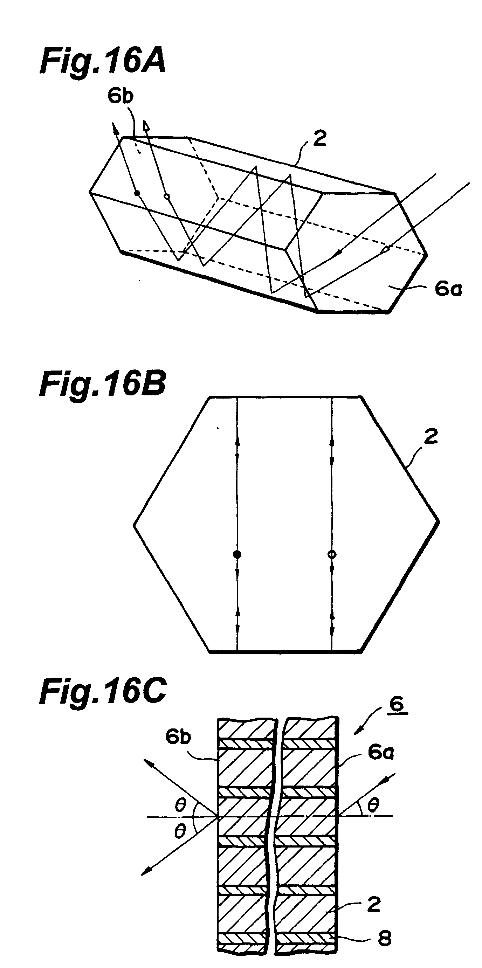

In thus manufactured optical components 6, since the section of the core 2 of each optical fiber 4 is a polygon having mutually parallel diagonals such as square and hexagon, the following problems are known. That is, the progress of the light entering the incident plane of the optical component 6 in the core 2 may take place in two modes, that is, spiral progress as shown in Fig. 15A to Fig. 15C, and band-like progress as shown in Fig. 16A to Fig. 16C. In Fig. 15A to Fig. 15C and Fig. 16A to Fig. 16C, the white circles and black circles show the light incident positions.

Fig. 15A shows the mode of progress of the light entering the incident plane (core 2 incident plane) 6a of the optical component 6 within the core 2, and Fig. 15B is a projection of the light progress locus on a plane parallel to the incident plane 6a. As shown in Fig. 15A and Fig. 15B, the light entering the incident plane 6a of the optical component 6 at random incident angles (excluding the specified incident angle explained in Fig. 16A to Fig. 16C) progresses spirally in the core 2. As a result, as shown in Fig. 15C, if the light enters the incident plane 6a of the optical component 6 at a specific incident angle θ, it is emitted at various exit angles from the exit plane 6b of the optical component 6 due to difference in the incident position.

On the other hand, as shown in Fig. 16A and Fig. 16B, the light entering the incident plane 6a of the optical component 6 at a specified incident angle (the incident angle allowing the light to reflect and progress only on the parallel opposite planes of the core 2) progresses in the core 2 in a band pattern. As a result, as shown in Fig. 16C, the light entering the incident plane 6a of the optical component 6 at specific incident angleθ is emitted from the exit 6b of the optical component 6 also at the same exit angle θ regardless of difference in the incident position. Therefore, in the output image emitted from the exit plane 6b of the optical component 6, a pattern having an intensity only in a specific exit angle is formed, and this pattern becomes noise to lower the resolution of the optical component 6. In particular, since the optical component manufactured by integrally forming multi-fibers (multi-multi-fibers) differs in the degree of deformation of the core 2 between the central part and edge part of the multi-fibers, pattern noise depending on the sectional shape of the multi-fibers is caused due to difference in the degree of deformation, and the resolution of the optical component 6 is extremely lowered.

By contrast, the optical component 10 of the embodiment is as follows. Fig. 4 and Fig. 5 are projections of the locus of the light entering the incident plane (core 14 incident plane) 10a of the optical component 10 and progressing in the core 14, on a plane parallel to the incident plane 10a. Herein, white circles in Fig. 4 and Fig. 5 indicate light incident positions. The section of the core 14 is a rectangular equilateral triangle, which does not have mutually parallel diagonals, and it eliminates the phenomenon of band-like progress of the light entering the incident plane 10a of the optical component 10 by reflecting only on the parallel planes of the core 14. That is, as clear from the locus shown in Fig. 4 and Fig. 5, the light progressing in the core 14 advances in the core 14 at various angles to the incident plane 10a (or exit plane 10b).

Therefore, if the light enters the incident plane 10a of the optical component 10 at a specific incident angle θ, the light is emitted from the exit plane 10b of the optical component 10 at various exit angles depending on the difference in the incident position, and any pattern having an intensity only in a specific exit angle is not formed.

The effects of the optical component of the embodiment are explained. In the optical component 10, since the section of the core 14 for composing the optical component 10 is a rectangular triangle, pattern having an intensity only in a specific exit angle is not formed. As a result, pattern noise can be prevented, and an output image of a high resolution is obtained from the exit plane 10b of the optical component 10.

Also in the optical component 10, since the section of the core 14 for composing the optical component 10 is a rectangular triangle, when manufacturing the optical component 10, the optical fibers or optical fiber pairs 30 can be arrayed without allowing clearance. Therefore, in the heating and pressing process, the section of the optical fiber (in particular, the core 14) is hardly deformed.

An optical component according to a second embodiment of the invention is described below while referring to the drawings. What an optical component 40 of this embodiment differs from the optical component 10 of the first embodiment lies in the sectional shape of the core, that is, the optical component 40 of this embodiment is formed by disposing a plurality of optical fibers having the core of which sectional shape is a regular triangle, parallel to each other, as compared with the optical component 10 of the first embodiment formed disposing a plurality of optical fibers having the core 14 of which sectional shape is a rectangular equilateral triangle, parallel to each other.

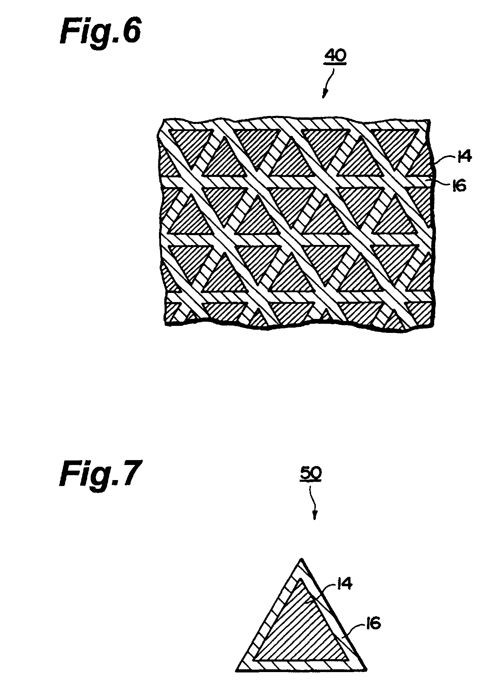

As shown in Fig. 6, the sectional shape of the optical component 40 has a structure of an orderly array of optical fibers having the core 14 of which section is a regular triangle. The clad 16 of each optical fiber is integrally formed by heating and pressing process, and is disposed to fill up the gap between adjacent optical fiber pairs. To enhance the resolution of the output pattern, preferably, a light absorbent 17 may be provided in the clad 16 same as in the optical component 10 of the first embodiment, but it is not an absolute requirement.

The manufacturing method of the optical component 40 of this embodiment is explained. The optical component 40 of this embodiment can be manufactured in a manufacturing method similar to that of the optical component 10 of the first embodiment. That is, a core base material 18 of a triangular column having a bottom of regular triangle is mounted on a clad base material 26 having a triangular cylindrical shape to form a base material 28, and this base material 28 is drawn in wires, and optical fibers having the core 14 of a regular triangular section are manufactured. The section of optical fibers 50 manufactured in this method has a shape as shown in Fig. 7. In this structure, the clad 16 of a uniform thickness is disposed around the core 14 of a regular triangular section. Later, the plurality of the optical fibers 50 are disposed parallel to each other, and heated and pressed to be formed integrally.

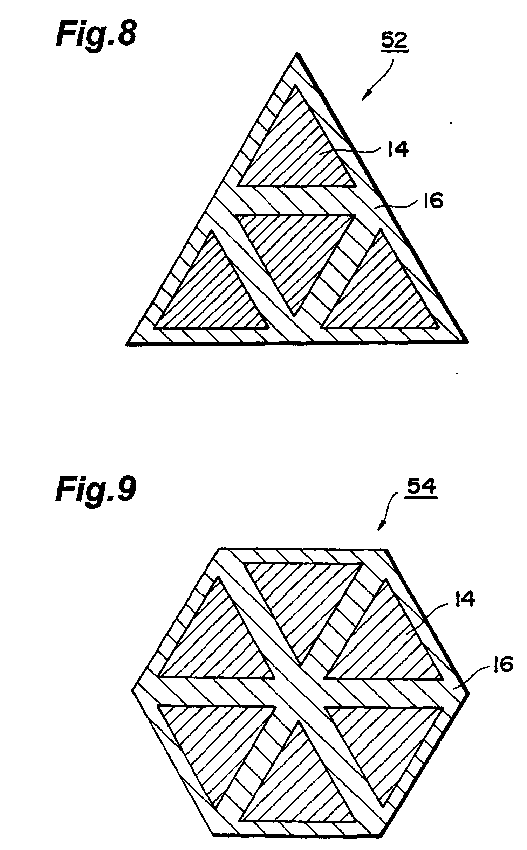

The optical component 40 of this embodiment may be manufactured also in the following procedure. That is, a core base material 18 of a triangular column having a bottom of regular triangle is mounted on a clad base material 26 having a triangular cylindrical shape to form a base material 28, and four or six thereof are combined to manufacture base materials having regular triangular and regular hexagonal sections. Optical fiber sets manufactured by drawing such base materials have the section as shown in Fig. 8 or Fig. 9.

An optical fiber set 52 manufactured by drawing base materials having regular triangular section by combining four base materials 28 has a structure as shown in Fig. 8, in which four cores 14 with regular triangular section are disposed, the clad 16 is disposed in the gap of and around each core 14, and the entire section is a regular triangle.

Similarly, an optical fiber set 54 manufactured by drawing base materials having regular hexagonal section by combining six base materials 28 has a structure as shown in Fig. 9, in which six cores 14 with regular triangular section are disposed, the clad 16 is disposed in the gap of and around each core 14, and the entire section is a regular hexagon.

The optical component 40 is manufactured by disposing these optical fiber sets 52 or 54 parallel to each other, heating, pressing and forming integrally.

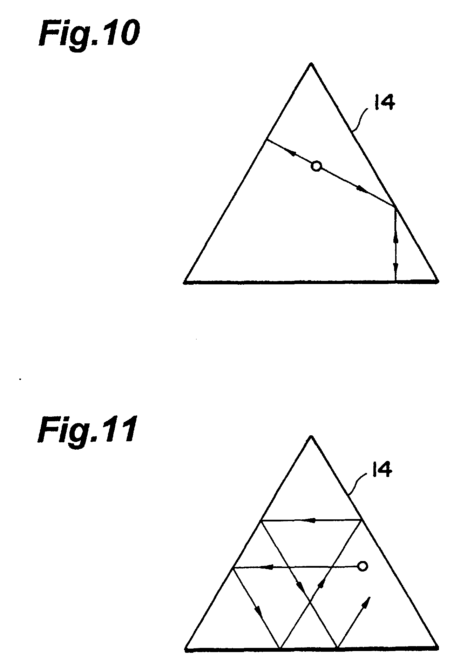

The optical component 40 of the embodiment also has the same operation and effects as the optical component 10 of the first embodiment. That is, since the section of the core 14 is a regular triangle, and does not have mutually parallel diagonals, as shown in Fig. 10 and Fig. 11, it eliminates the phenomenon of band-like progress of the light entering the incident plane of the optical component 40 by reflecting only on the parallel planes of the core 14, and therefore any pattern having an intensity only in a specific exit angle is not formed. As a result, an output image of a high resolution is obtained.

The optical components 10 and 40 in the foregoing embodiments are optical parts formed by arraying a plurality of optical fibers parallel to each other, but the optical components may be formed in a taper shape for emitting the light entering the incident plane in a magnified or reduced image, by arraying a plurality of optical fibers in a curved form.

### Industrial Applicability

This optical component has numerous benefits including a high transmission efficiency and a smaller in size of optical system as compared with the lens, and is hence used in various fields such as fingerprint detecting system and radiation detector.

## Claims

1. An optical component formed by arraying a plurality of optical fibers, wherein the core sectional shape of said optical fibers is nearly triangular.

2. The optical component of claim 1, wherein the core sectional shape of said optical fibers is nearly rectangular equilateral triangular, and two optical fibers are combined to form an optical fiber pair of which section is nearly square.

3. The optical component of claim 1, wherein the core sectional shape of said optical fibers is nearly regular triangular, and said optical fibers are arrayed.
